# EUROPÄISCHE PATENTANMELDUNG

(11) **EP 1 046 584 A2**
(43) Veröffentlichungstag der Anmeldung: **25.10.2000**
(21) Anmeldenummer: 00105284.4
(22) Anmeldetag: 14.03.2000
(51) Int. Cl.: B65B 51/30

(54) **Vorrichtung zum Verpacken**

(30) Priorität: 09.04.1999 DE 19916003
(71) Anmelder: Rovema Verpackungsmaschinen GmbH, 35463 Fernwald (DE)
(72) Erfinder: Kammler, Roman, Dr., 67547 Worms (DE); Baur, Walter, Dr., 63584 Gründau (DE)

(57) **Zusammenfassung**

Um den technischen Aufwand für eine Vorrichtung zum Verpacken, z. B. eine horizontale Beutelmaschine, zu verringern, wird vorgeschlagen von zwei gegeneinander wirkenden und eine Folienbahn (3) verschweißenden Siegelbacken (1, 2) nur eine Siegelbacke (1) für einen umlaufenden Betrieb vorzusehen. Die zweite Siegelbacke (2) wird entlang einer Bahn (24) mit der ersten Siegelbacke (1) in Transportrichtung (4) der Folienbahn (3) mitbewegt und entgegen der Folienbahn (3) zurückgesetzt. In einer vorteilhaften Ausgestaltung ist die zweite Siegelbacke (2) an einem Schlitten (22) befestigt, der entlang einer horizontalen Schiene (23) bewegt wird, und eine Mitnehmerverbindung (17) überträgt die in Folientransportrichtung (4) verlaufende Komponente der Umlaufbewegung der ersten Siegelbacke (1) auf die zweite Siegelbacke (2).

## Beschreibung

Die Erfindung betrifft eine Vorrichtung zum Verpacken, mit einer weitertransportierten Folienbahn, zwei Siegelbacken zum Verschweißen der Folienbahn, wobei die umgeformte Folienbahn zwischen den Siegelbacken eingeklemmt und derart verschweißt wird, und die erste Siegelbacke auf die Folienbahn zu, mit der Folienbahn und von dieser weg bewegbar ist, sowie mit einer Trenneinrichtung zum Durchtrennen der verschweißten Folienbahn.

Es ist bei Schlauchbeutelmaschinen bekannt, daß zwei Siegelbacken gegeneinander bewegt werden, um eine schlauchförmig oder längsgefaltete Folienbahn quer zu ihrer Transportrichtung zu verschweißen. Derart verschweißte Bereiche der Folienbahn können befüllt und mittels einer weiteren Schweißeinrichtung längs zur Transportrichtung verschweißt werden, oder es können einseitig offene Beutelbereiche erzeugt werden. Die Bereiche werden mittels der Trenneinrichtung von der Folienbahn abgetrennt, so daß Beutel entstehen. Diese können befüllte und verschweißte Beutel oder einseitig offene Leerbeutel sein.

Aus der EP 0 469 105 sind zwei um jeweils Achsen in entgegengesetztem Sinn umlaufende Siegelbacken einer vertikalen Schlauchbeutelmaschine bekannt, die jeweils eine D-förmige Bahn beschreiben, und die entlang des geraden Abschnitts der Bahn in mitlaufender Weise eine kontinuierlich weiterbewegte Folienbahn quer zu deren Transportrichtung verschweißen, um derart eine Kopfnaht eines Beutels und eine Bodennaht eines nachfolgenden Beutels im längsverschweißten Folienschlauch zu erzeugen. Zwischen diesen Nähten wird die Folienbahn durchtrennt.

Des weiteren ist eine horizontale Schlauchbeutelmaschine bekannt, bei der eine Folienbahn längs und entlang ihrer Mittellinie umgeknickt wird. Die Folienbahn wird taktweise weiterbewegt. Bei jedem Folienstillstand werden zwei vertikal ausgerichtete Siegelbacken gegeneinander bewegt, um in einem Schweißvorgang jeweils eine Seitennaht eines Beutels und eine Seitennaht eines nachfolgenden Beutels zu erzeugen. Zwischen diesen Seitennähten wird die Folienbahn durchtrennt, um einen erzeugten Beutel von der Folienbahn abzutrennen.

Die bekannten Vorrichtungen zum Verpacken haben den Nachteil, daß die Mechanik zum Gegeneinanderpressen der Siegelbacken relativ aufwendig ist, da beide Siegelbacken von der Folienbahn weg und anschließend wieder auf sie zu bewegt werden. Diese Mechanik ist noch aufwendiger, wenn die Siegelbacken mit der bewegten Folienbahn streckenweise mitbewegt werden, um während des Folientransports die Folienbahn zu verschweißen.

Der Erfindung liegt die Aufgabe zu Grunde, bei der eingangs beschriebenen Vorrichtung den technischen Aufwand für eine Verschweißung einer bewegten Folienbahn zu verringern.

Gelöst ist die Aufgabe gemäß dem kennzeichnenden Teil des Anspruchs 1. Danach ist die zweite Siegelbacke für eine Mitbewegung durch die erste Siegelbacke vorgesehen, verläuft eine Bahn für die Mitbewegung entlang der Folienbahn, und ist die zweite Siegelbacke gegen die Transportrichtung der Folienbahn zurücksetzbar.

Die erfindungsgemäße Vorrichtung hat den Vorteil, daß der technische Aufwand für eine Verschweißung einer bewegten Folienbahn reduziert ist, da lediglich die erste Siegelbacke mittels eines Backenantriebs und einer relativ aufwendigen Mechanik zunächst entlang einer Siegelstrecke mit der Folienbahn bewegt und anschließend, von der Folienbahn entfernt, in ihre Ausgangsposition zurückgesetzt werden muß. Die zweite Siegelbacke wird lediglich entlang der Siegelstrecke auf einer Bahn synchron zur ersten Siegelbacke mitbewegt und erfüllt hierbei ihren Zweck, zusammen mit der ersten Siegelbacke einen Siegeldruck auf die Folie auszuüben und Wärme in zwei aufeinanderliegende Folienbereiche zu bringen, um diese miteinander zu verschweißen. Während die erste Siegelbacke am Ende der Siegelstrecke senkrecht zur Transportrichtung von der Folienbahn entfernt und danach wieder auf die Folienbahn zu in ihre Ursprungsstellung zurückgesetzt wird, um dort wieder gegen die Folienbahn zu wirken, wird die zweite Siegelbacke mittels einer einfachen Mechanik lediglich irgendwie, z. B. auf ihrer Bahn gegen die Transportrichtung der Folienbahn, zurückgesetzt. Während also die erste Siegelbacke in einer Ebene umläuft, führt die zweite Siegelbacke z. B. nur eine Hin- und Herbewegung aus, wobei letztere während des Siegelvorganges parallel zur ersten Siegelbacke bewegt wird.

Weitere, vorteilhafte Ausgestaltungen der Erfindung sind in den Ansprüchen 2 bis 12 beschrieben.

Verläuft die Bahn parallel zur Transportrichtung (Anspruch 2), so ist die Spannung in der Folienbahn während des Siegelvorganges konstant. Zudem ist eine gerade Bahn in einfacher Weise zu realisieren. Die zweite Siegelbacke kann auf der Mittellinie der Folienbahn verlaufen. Eine Verschweißung der Folie kommt dabei nur zu Stande, wenn mitsamt der ersten Siegelbacke ein Siegeldruck auf die Folie ausgeübt wird. Um aber beim Zurücksetzen der zweiten Siegelbacke den Folientransport nicht zu sehr zu beeinflussen, wird vorgesehen, zwischen der Siegelfläche der zweiten Siegelbacke und der Mittellinie einen Abstand vorzusehen, der vorzugsweise 1 bis 4 mm beträgt. Mit diesem Abstand wird ein gutes Siegelergebnis bei sicherem Folienverlauf erreicht. Eine Bahn kann durch eine Schiene vorgegeben werden, entlang der sich ein Schlitten bewegt, auf welchem die zweite Siegelbacke befestigt ist (Anspruch 12). Die Schiene kann gerade sein und parallel zur Mittellinie verlaufen, sie könnte aber auch gekrümmt oder umlaufend sein. Bei einer umlaufenden Bahn führt die zweite Siegelbacke eine umlaufende Bewegung aus.

Die zweite Siegelbacke benötigt keinen separaten Antrieb, sondern wird durch die Bewegung der ersten Siegelbacke mitbewegt, wenn analog Anspruch 3 zwischen den Siegelbacken eine Mitnehmerverbindung vorgesehen ist, welche die zweite Siegelbacke entsprechend der in Transportrichtung und entgegengesetzt dazu erfolgenden Bewegung der ersten Siegelbacke mitnimmt. Prinzipiell würde auch nur ein Mitnehmer in Transportrichtung genügen. Die zweite Siegelbacke könnte dann mittels Federkraft in ihre Ausgangsposition zurückgestellt werden.

Verläuft die Transportrichtung horizontal (Anspruch 4), so kann die Folienbahn entlang ihrer Mittellinie umgebogen und derart quer zur Transportrichtung gesiegelt werden (Anspruch 5). Hierbei kann die zweite Siegelbacke relativ nahe an die Mittellinie gesetzt werden, ohne den Folienlauf zu stören.

Es können relativ hohe Verpackungsgeschwindigkeiten erzielt werden, wenn die erste Siegelbacke um eine Achse rotiert (Anspruch 6). Wird dagegen keine kreisförmige Umlaufbahn für die erste Siegelbacke gewählt, sondern eine D-förmige, so steht entlang des geraden D-Abschnitts ein relativ langer Weg mit geschlossenen Siegelbacken zur Verfügung, um eine Folienverschweißung auszuführen. Eine D-förmige Umlaufbahn wird z. B. erreicht, wenn die erste Siegelbacke mittels eines Viergelenkmechanismus um zwei parallel zueinander angeordnete Drehachsen rotiert (Anspruch 7), wobei die Siegelfläche während des Siegelvorganges von diesem Mechanismus parallel zur Transportrichtung gehalten wird. Der gerade Abschnitt der D-förmigen Umlaufbahn wird durch eine Abfederung der ersten Siegelbacke senkrecht zur Transportrichtung erreicht (Anspruch 8).

Eine relativ hohe Verpackungsgeschwindigkeit wird zudem dadurch erreicht, daß die erste Siegelbacke kontinuierlich umläuft (Anspruch 11). Hierzu und auch dazu, daß die Umlaufgeschwindigkeit dieser Siegelbacke nicht konstant sein muß, eignet sich ein Servomotor (Anspruch 10). Die Verpackungsgeschwindigkeit wird weiter erhöht, wenn das Zurückbewegen der ersten Siegelbacke schneller erfolgt als das Bewegen der Siegelbacken während des Schweißvorganges.

Im folgenden wird die Erfindung an Hand ein Ausführungsbeispiel darstellender Figuren näher beschrieben. Es zeigt:

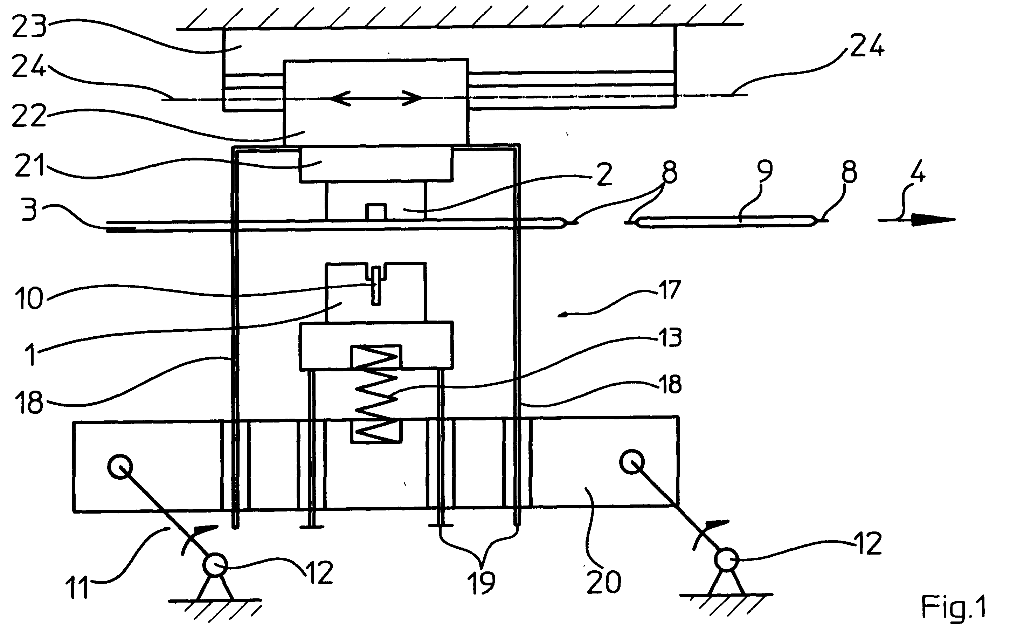

- Figur 1: in einer Ansicht von oben eine Vorrichtung zum Verpacken, die Teil einer horizontalen Schlauchbeutelmaschine ist, mit einer hin und her laufenden zweiten Siegelbacke, einer mittels eines Viergelenkmechanismus umlaufenden ersten Siegelbacke und einer entlang ihrer Mittellinie umgebogenen Folienbahn, sowie

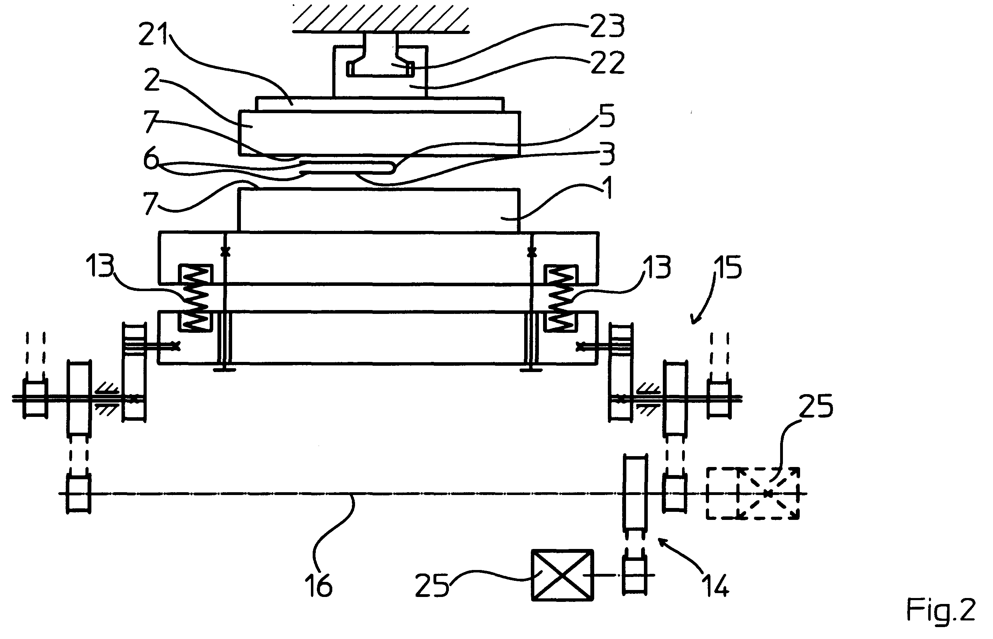

- Figur 2: in einer Seitenansicht den Gegenstand der Figur 1, jedoch zusätzlich mit Antriebs- und Getriebemittel.

Bei einer Vorrichtung zum Verpacken wird eine weitertransportierte Folienbahn 3 mittels zweier Siegelbacken 1, 2 verschweißt. Während des Schweißens wird die Folienbahn 3 zwischen den Siegelbacken 1, 2 eingeklemmt. Die erste Siegelbacke 1 wird jeweils auf die Folienbahn 3 zu, eine bestimmte Strecke mit der Folienbahn 3, und danach, unter Beschreibung eines Bogens von der Folienbahn 3 weg und wieder auf die Folienbahn 3 zu, entgegen der Transportrichtung 4 der Folienbahn 3 zurückgesetzt. Die Transportrichtung 4 verläuft horizontal. Die Folienbahn 3 ist entlang ihrer Mittellinie 5 umgebogen, wobei die Ränder 6 der Folienbahn 3 aneinanderliegen. Die Siegelbacken 1, 2 sind vertikal ausgerichtet. Ihre Siegelflächen 7 erzeugen bei jedem Siegelvorgang eine Seitennaht 8 eines Beutels 9 und eine Seitennaht 8 eines nachfolgenden Beutels. Zwischen diesen Siegelnähten 8 wird die Folienbahn 3 mittels einer in der Siegelbacke 1 befindlichen Trenneinrichtung 10 durchtrennt.

Die erste Siegelbacke 1 beschreibt eine D-förmige Umlaufbahn. Diese wird dadurch erzeugt, daß die erste Siegelbacke 1 mittels eines Viergelenkmechanismus 11 um zwei parallel zueinander angeordnete Drehachsen 12 rotiert, und daß die erste Siegelbacke 1 mittels Federn 13 senkrecht zur Transportrichtung 4 abgefedert ist. Infolge der Abfederung entsteht der gerade Abschnitt der D-förmigen Umlaufbahn. Als Antrieb für die erste Siegelbacke 1 ist ein Servomotor vorgesehen, der die Siegelbacke 1 über zwei Zahnriemengetriebe 14, 15 kontinuierlich um eine Achse 16 umlaufend antreibt. Der Servomotor 25 könnte die Achse 16 aber auch direkt axial antreiben (gestrichelt dargestellte Alternative).

Die zweite Siegelbacke 2 ist für eine Mitbewegung durch die erste Siegelbacke 1 vorgesehen. Hierzu ist zwischen den Siegelbacken 1, 2 eine Mitnehmerverbindung 17 vorgesehen, welche die zweite Siegelbacke 2 entsprechend der in Transportrichtung 4 und entgegengesetzt dazu verlaufenden Bewegungskomponenten der ersten Siegelbacke 1 mitnimmt. Die Mitnehmerverbindung 17 weist zwei Mitnehmer 18 auf, die in Aussparungen 19 eines Trägers 20 der ersten Siegelbacke 1 verschiebbar sind. Die zweite Siegelbacke 2 ist über eine Montageplatte 21 starr mit einem Schlitten 22 verbunden, welcher an einer geraden Schiene 23 verschiebbar befestigt ist. Die Schiene 23 verläuft parallel zur Transportrichtung 4. Zwischen der Siegelfläche 7 der zweiten Siegelbacke 2 und der Mittellinie 5 der Folienbahn 3 beträgt der Abstand 3 mm, so daß die Folienbahn 3 beim Schließen der Siegelbacken 1, 2 im Schweißbereich um 3 mm von ihrer Mittellinie 5 weg zur zweiten Siegelbacke 2 hin versetzt wird.

Läuft die erste Siegelbacke 1 einmal um, so wird die zweite Siegelbacke 2 zunächst entlang einer zur Schiene 23 und zur Folienbahn 3 parallelen Bahn 24 in Transportrichtung 4 verschoben und dann auf dieser Bahn 24 entgegen der Transportrichtung 4 zurückgesetzt. Mit jeder Umdrehung der ersten Siegelbacke 1 oszilliert die zweite Siegelbacke 2 einmal entlang ihrer Bahn 24. Ein technisch aufwendiges Umlaufen der zweiten Siegelbacke 2 ist nicht notwendig.
- 1, 2: Siegelbacke
- 3: Folienbahn
- 4: Transportrichtung
- 5: Mittellinie
- 6: Rand
- 7: Siegelfläche
- 8: Seitennaht
- 9: Beutel
- 10: Trenneinrichtung
- 11: Viergelenkmechanismus
- 12: Drehachse
- 13: Feder
- 14, 15: Zahnriemengetriebe
- 16: Achse
- 17: Mitnehmerverbindung
- 18: Mitnehmer
- 19: Aussparung
- 20: Träger
- 21: Montageplatte
- 22: Schlitten
- 23: Schiene
- 24: Bahn
- 25: Servomotor

## Patentansprüche

1. Vorrichtung zum Verpacken, mit einer weitertransportierten Folienbahn, zwei Siegelbacken zum Verschweißen der Folienbahn, wobei die umgeformte Folienbahn zwischen den Siegelbacken eingeklemmt und derart verschweißt wird, und die erste Siegelbacke auf die Folienbahn zu, mit der Folienbahn, und von dieser weg bewegbar ist, sowie mit einer Trenneinrichtung zum Durchtrennen der verschweißten Folienbahn, dadurch gekennzeichnet, daß die zweite Siegelbacke (2) für eine Mitbewegung durch die erste Siegelbacke (1) vorgesehen ist, daß eine Bahn (24) für die Mitbewegung entlang der Folienbahn (3) verläuft, und daß die zweite Siegelbacke (2) gegen die Transportrichtung (4) der Folienbahn (3) zurücksetzbar ist.

2. Vorrichtung nach Anspruch 1, dadurch gekennzeichnet, daß die Bahn (24) parallel zur Transportrichtung (4) verläuft.

3. Vorrichtung nach Anspruch 1 oder Anspruch 2, dadurch gekennzeichnet, daß zwischen den Siegelbacken (1, 2) eine Mitnehmerverbindung (17) vorgesehen ist welche die zweite Siegelbacke (2) entsprechend der in Transportrichtung (4) und entgegengesetzt dazu erfolgenden Bewegung der ersten Siegelbacke (1) mitnimmt.

4. Vorrichtung nach Anspruch 1, Anspruch 2 oder Anspruch 3, dadurch gekennzeichnet, daß die Transportrichtung (4) horizontal verläuft.

5. Vorrichtung nach Anspruch 4, dadurch gekennzeichnet, daß die Folienbahn (3) entlang ihrer Mittellinie (5) umgebogen ist, wobei die Ränder (6) der Folienbahn (3) aneinander liegen, und daß die Siegelbacken (1, 2) vertikal ausgerichtet sind.

6. Vorrichtung nach Anspruch 1, dadurch gekennzeichnet, daß die erste Siegelbacke um eine Achse rotiert.

7. Vorrichtung nach mindestens einem der Ansprüche 1 bis 5, dadurch gekennzeichnet, daß die erste Siegelbacke (1) mittels eines Viergelenkmechanismus (11) um zwei parallel zueinander angeordnete Drehachsen (12) rotierbar ist.

8. Vorrichtung nach Anspruch 1, Anspruch 6 oder Anspruch 7, dadurch gekennzeichnet, daß die erste Siegelbacke (1) mittels einer Feder (13) senkrecht zur Transportrichtung (4) abgefedert ist.

9. Vorrichtung nach Anspruch 2 oder Anspruch 5, dadurch gekennzeichnet, daß zwischen der Siegelfläche (7) der zweiten Siegelbacke (2) und der Mittellinie (5) ein Abstand vorgesehen ist, der vorzugsweise 1 bis 4 mm beträgt.

10. Vorrichtung nach Anspruch 6 oder Anspruch 7, dadurch gekennzeichnet, daß als Antrieb für die erste Siegelbacke (1) ein Servomotor (25) vorgesehen ist.

11. Vorrichtung nach mindestens einem der Ansprüche 1 bis 10, dadurch gekennzeichnet, daß die erste Siegelbacke (1) kontinuierlich umläuft.

12. Vorrichtung nach mindestens einem der Ansprüche 1 bis 11, dadurch gekennzeichnet, daß die zweite Siegelbacke (2) an einem Schlitten (22) befestigt ist, der an einer Schiene (23) entlangbewegbar ist.
